# EUROPÄISCHE PATENTSCHRIFT

(11) **EP 3 409 148 B1**
(45) Veröffentlichungstag und Bekanntmachung des Hinweises auf die Patenterteilung: **29.01.2020**
(21) Anmeldenummer: 18170515.3
(22) Anmeldetag: 03.05.2018
(51) Int. Cl.: A47J 31/36, A47J 31/44, A47J 31/58

(54) **KAFFEEMASCHINE, INSBESONDERE KAFFEEVOLLAUTOMAT**
COFFEE MACHINE, IN PARTICULAR A FULLY AUTOMATIC COFFEE MAKER
MACHINE À CAFÉ, EN PARTICULIER MACHINE À CAFÉ ENTIÈREMENT AUTOMATIQUE

(30) Priorität: 30.05.2017 DE 102017209053
(43) Veröffentlichungstag der Anmeldung: 05.12.2018
(73) Patentinhaber: BSH Hausgeräte GmbH, 81739 München (DE)
(72) Erfinder: Wrehde, Stefan, 83365 Nußdorf (DE); Stadler, Georg, 5101 Bergheim b. Salzburg (AT); Brunner, Andreas, 83301 Traunreut (DE); Strobl, Robert, 83246 Unterwössen (DE)

(56) Entgegenhaltungen:
- EP-A1- 2 545 823
- EP-A1- 3 138 449
- WO-A1-2016/124450
- DE-A1-102012 103 861
- JP-A- 2001 222 761

## Beschreibung

Die Erfindung betrifft eine Kaffeemaschine, insbesondere einen Kaffeevollautomaten. Die Erfindung betrifft ferner ein Verfahren zur Bestimmung der Menge des in einem Tresterbehältnis einer Kaffeemaschine angesammelten Tresters.

Herkömmliche Kaffeemaschinen besitzen ein Tresterbehältnis zum Aufnehmen des in der Brühkammer im Zuge der Kaffeeherstellung ausfallenden Tresters. Gerade bei in der Gastronomie benutzten Kaffeemaschinen, insbesondere bei Kaffeevollautomaten, ist es von hohem Interesse, den Füllstand des Tresterbehältnisses zu kennen. Typischerweise wird bei modernen Kaffeemaschinen das Tresterbehältnis zum Entleeren von einer Aufnahmestellung, in welcher es den in der Brühkammer anfallenden Trester aufnimmt, in eine Entleerstellung verstellt. In der Entleerstellung kann der Trester aus dem Tresterbehältnis entfernt werden. Ein Verstellen in die Entleerstellung kann beispielsweise durch ein einfaches Entnehmen des Tresterbehältnisses aus der Kaffeemaschine bzw. aus deren Gehäuse erreicht werden. Nach dem erneuten Einsetzen des Tresterbehältnisses in die Kaffeemaschine, also nach dem Verstellen des Tresterbehältnisses in die Aufnahmestellung, wird ein in der Kaffeemaschine intern vorhandener Tresterzähler zurückgesetzt, sodass eine in der Kaffeemaschine vorgesehene Steuerungseinheit zur Steuerung des Brühvorgangs davon ausgeht, dass Tresterbehältnis nunmehr leer ist und folglich wieder eine Maximalmenge an Trester aufnehmen kann.

Im Zuge der Herstellung des Kaffeeprodukts in der Brühkammer wird der Tresterzähler automatisch heraufgesetzt, bis ein Maximalwert erreicht wird, der einem vollständig mit Trester befüllten Tresterbehältnis entspricht. Wird besagter Maximalwert erreicht, so kann der Benutzer der Kaffeemaschine von der Steuerungseinheit mittels eines optischen oder akustischen Signals darauf hingewiesen werden, dass das Tresterbehältnis vollständig gefüllt ist und erneut entleert werden muss.

Im Zuge des Entleer-Vorgangs wird aber in der Praxis vom Benutzer das Tresterbehältnis oftmals nur teilweise geleert oder sogar ohne Leerung wieder in die Kaffeemaschine eingesetzt. Wird in diesem Fall besagter dennoch wie oben beschrieben Tresterzähler zurückgesetzt, so entspricht dies nicht dem tatsächlichen Leerzustand des Tresters. Das erneute Hochzählen des Tresterzählers im Zuge des Brühvorgangs führt in der Folge dazu, dass das Tresterbehältnis schon vollständig mit Trester befüllt ist, bevor der TresterZähler seinen Maximalwert erreicht. Die vollständige Befüllung des Tresterbehältnisses mit Trester wird also nicht rechtzeitig erkannt. Somit besteht die Gefahr einer unerwünschten Überfüllung des Tresterbehältnisses mit Trester.

Die vorliegende Erfindung befasst sich daher mit dem Problem, eine Kaffeemaschine zu schaffen, bei welcher die im Tresterbehältnis vorhandene Menge an Trester genau bestimmt werden kann. Insbesondere soll eine Kaffeemaschine geschaffen werden, bei welcher vorangehend erläutertes Problem nicht mehr auftritt.

Diese Aufgabe wird durch eine Kaffeemaschine gemäß den unabhängigen Patentansprüchen gelöst. Bevorzugte Ausführungsformen sind Gegenstand der abhängigen Patentansprüche.

Grundgedanke der Erfindung ist demnach, die Menge an im Tresterbehältnis angesammeltem Trester mittels einer Lasereinrichtung zu bestimmen, während das Tresterbehältnis zum Entleeren des Tresters von einer Aufnahmestellung, in welcher es den aus der Brühkammer der Kaffeemaschine ausfallenden Trester aufnimmt, in eine Entleerstellung verstellt wird, in welcher der Trester aus dem Tresterbehältnis entfernt werden kann, und umgekehrt. Im Zuge des Verstellens in die Entleerstellung kann somit bestimmt werden, welche Menge an Trester sich zwischenzeitlich im Tresterbehältnis angesammelt hat, welcher der Trester aus dem Tresterbehältnis entfernt werden kann, und umgekehrt. Im Zuge des Verstellens in die Aufnahmestellung kann überprüft werden, ob sich noch Trester im Tresterbehältnis befindet oder ob dieses vollständig entleert wurde.

Durch Vergleich der vor und nach dem Entleeren ermittelten Menge des im Tresterbehältnis vorhandenen Tresters kann bestimmt werden, welche Menge an Treter entleert wurde.

Wird festgestellt, dass das Tresterbehältnis nicht vollständig entleert wurde, so kann dies beim Zurücksetzen des oben beschriebenen Tresterzählers, welcher die Menge an beim Brühvorgang erzeugtem Trester wiedergibt, berücksichtigt werden. Insbesondere kann für den Fall, dass eine Restmenge an Trester ermittelt wurde, ein fehlerhaftes Zurücksetzen des Tresterzählers auf einen Nullwert verhindert werden.

Generell kann die mittels der hier vorgestellten Kaffeemaschine ermittelbare Menge an Trester jedoch auch für andere Funktionen der Kaffeemaschine genutzt werden.

Zur Ermittlung der Füllmenge des Tresterbehältnisses mit Trester wird erfindungsgemäß eine Lasereinrichtung verwendet. Wird diese Lasereinrichtung relativ zum Tresterbehältnis in geeigneter Weise positioniert und ausgerichtet, so kann die von der Lasereinrichtung erzeugte und am Trester reflektierte Laserstrahlung detektiert und auf diese Weise der Abstand des Tresters, insbesondere des oberen Randes des Tresters im Tresterbehältnis, relativ zur Lasereinrichtung bestimmt werden. Auf diese Weise lässt sich durch Auswertung der von der Lasereinrichtung ermittelten Abstandsinformation während des Bewegens des Tresterbehältnisses relativ zur Lasereinrichtung ein Höhenprofil des im Tresterbehältnis angesammelten Tresters ermitteln. Ein solches Höhenprofil korreliert mit der momentanen Füllstandshöhe des mit Trester befüllten Tresterbehältnisses, woraus wiederum die Menge an im Tresterbehältnis angesammeltem Trester abgeleitet werden kann.

Eine erfindungsgemäße Kaffeemaschine, insbesondere ein Kaffeevollautomat, umfasst eine Brühkammer zum Zubereiten von Kaffee. Weiterhin ist ein Tresterbehältnis vorgesehen, welches zum Aufnehmen des in der Brühkammer erzeugten Tresters in einer Aufnahmestellung angeordnet ist. Zum Entleeren des Tresterbehältnisses ist dieses von der Aufnahmestellung in eine Entleerstellung verstellbar. Außerdem umfasst die Kaffeemaschine eine Lasereinrichtung zum Detektieren des im Tresterbehältnis angesammelten Tresters. Erfindungsgemäß sind die Lasereinrichtung und das Tresterbehältnis derart aufeinander abgestimmt, dass die Lasereinrichtung während des Verstellens des Tresterbehältnisses von der Aufnahmestellung in die Entleerstellung und/oder während des Verstellens des Tresterbehältnisses von der Entleerstellung in die Aufnahmestellung die Menge an in dem Tresterbehältnis angesammeltem Trester bestimmt oder bestimmen kann.

Gemäß einer bevorzugten Ausführungsform ist die Lasereinrichtung dafür eingerichtet, zu bestimmen, ob sich das Tresterbehältnisses in der Aufnahmestellung oder in der Entleerstellung befindet.

Gemäß einer bevorzugten Ausführungsform ist die Lasereinrichtung zur Bestimmung eines Abstands der Lasereinrichtung zu dem im Tresterbehältnis vorhandenen Trester ausgebildet, so dass mittels einer solchen Abstandsbestimmung das Höhenprofil des im Tresterbehältnis angesammeltem Tresters bestimmt werden kann.

Bei einer vorteilhaften Weiterbildung ist die Lasereinrichtung zum Bestimmen eines Höhenprofils des beim Verstellen des Tresterbehältnisses durch den Erfassungsbereich der Lasereinrichtung bewegten Tresters ausgebildet. Aus einem solchen Höhenprofil kann auf einfache Weise die Menge an im Tresterbehältnis angesammelten Trester bestimmt werden.

Bei einer vorteilhaften Weiterbildung ist die Lasereinrichtung oberhalb des Tresterbehältnisses angeordnet, so dass ein Erfassungsbereich der Lasereinrichtung, vorzugsweise von oben, auf einen oberen Rand des im Tresterbehältnis vorhandenen Tresters gerichtet ist. Diese Maßnahme vereinfacht die Bestimmung des gesuchten Höhenprofils.

Zweckmäßig ist der Erfassungsbereich der Lasereinrichtung derart ausgerichtet, dass er das Tresterbehältnis beim Verstellen von der Aufnahmestellung in die Entleerstellung und/oder umgekehrt erfasst.

Bei einer anderen vorteilhaften Weiterbildung ist zwischen der Lasereinrichtung und dem Tresterbehältnis eine für die Laserstrahlung transparente Blende angeordnet. Auf diese Weise kann ein unerwünschtes Beschlagen der Lasereinrichtung mit Wasserdampf vermieden werden.

Besonders bevorzugt ist die Blende mittels einer elektrischen Heizeinrichtung beheizbar. Durch ein Beheizen der Blende kann ein teilweises oder sogar vollständiges Beschlagen der Blende, welches die Transmission der Laserstrahlung mindern würde, weitegehend oder sogar vollständig verhindert werden.

Gemäß einer anderen bevorzugten Ausführungsform umfasst die Kaffeemaschine eine Sensoreinrichtung, mittels welcher ein Bewegen des Tresterbehältnisses aus der Aufnahmestellung weg detektierbar ist und welche bei einer solchen Detektion ein Sensorsignal erzeugt. Die Sensoreinrichtung kann als einfacher elektrischer, mechanischer oder elektromechanischer Schalter ausgebildet sein. Bei dieser Ausführungsform ist außerdem eine mit der Sensoreinrichtung zum Empfang des Sensorsignals in Kommunikationsverbindung stehende Steuerungseinrichtung vorgesehen. Die Steuerungseinrichtung ist derart ausgebildet, dass sie bei Empfang des Sensorsignals die Lasereinrichtung zur Bestimmung der Menge an im Tresterbehältnis vorhandenem Trester aktiviert.

Bei einer vorteilhaften Weiterbildung umfasst die Kaffeemaschine, insbesondere die Steuerungseinrichtung der Kaffeemaschine, eine mit der Lasereinrichtung zusammenwirkende Auswertungseinheit, in welcher wenigstens ein Referenz-Parameter zum Vergleich mit dem von der Lasereinrichtung erzeugten Höhenprofil hinterlegt ist. Bei dieser Weiterbildung ist besagter Referenz-Parameter vorzugsweise ein Abstand der Lasereinrichtung zu einem Bodenniveau der Kaffeemaschine. Durch Vergleich des Referenz-Höhenprofils mit dem mittels der Lasereinrichtung bestimmten Höhenprofil lässt sich die Füllstandshöhe des mit Trester befüllten Tresterbehältnisses bestimmen.

Zweckmäßig kann die Lasereinrichtung eine Laserstrahlquelle zum Emittieren von Laserstrahlung und einen Laserdetektor zum Empfangen der von der Laserstrahlquelle emittierten und am Trester reflektierten Laserstrahlung umfassen.

Besonders zweckmäßig kann die Lasereinrichtung, insbesondere die Laserstrahlquelle, als Punktlaser ausgebildet sein, der ein eindimensionales Strahlprofil erzeugt. Mittels eines Punktlasers kann ein zweidimensionales Höhenprofil des Tresters erstellt werden. Alternativ dazu kann die Lasereinrichtung als Laserscanner ausgebildet sein, der ein zweidimensionales Strahlprofil erzeugt. Mittels eines solchen, von einem Laserscanner erzeugten zweidimensionalen Strahlprofils kann ein dreidimensionales Höhenprofil des Tresters erstellt werden, in welchem dreidimensionale Höheninformation betreffend den im Tresterbehältnis aufgenommen Trester enthalten ist.

Gemäß einer anderen bevorzugten Ausführungsform sind die Lasereinrichtung und das Tresterbehältnis derart aufeinander abgestimmt, dass die Lasereinrichtung während des Verstellens des Tresterbehältnisses von der Aufnahmestellung in die Entleerstellung oder umgekehrt die Menge an in einem Wassersammelbehältnis angesammeltem Wasser bestimmt.

Die Erfindung betrifft ferner ein Verfahren zur Bestimmung der Menge des in einem Tresterbehältnis einer Kaffeemaschine angesammelten Tresters. Bevorzugt handelt es sich um eine vorangehend vorgestellte, erfindungsgemäße Kaffeemaschine. Gemäß dem Verfahren wird das Tresterbehältnis mit dem Trester durch den Erfassungsbereich einer Lasereinrichtung bewegt. Während des Bewegens des Tresterbehältnisses durch den Erfassungsbereich wird von der Lasereinrichtung der Abstand zum Trester bestimmt. Aus der Abstandsbestimmung wird ein Höhenprofil des im Tresterbehältnis vorhandenen Tresters ermittelt. Handelt es sich bei der Lasereinrichtung um einen Punktlaser, so kann ein zweidimensionales Höhenprofil erstellt werden. Handelt es sich bei der Lasereinrichtung um einen Laserscanner, so kann sogar ein dreidimensionales Höhenprofil erstellt werden.

Bei einer bevorzugten Ausführungsform des Verfahrens erfolgt die Ermittlung des Höhenprofils während des Verstellens des Tresterbehältnisses von einer Aufnahmestellung zum Aufnehmen von Trester aus einer Brühkammer der Kaffeemaschine in eine Entleerstellung zum Entleeren des Tresters aus dem Tresterbehältnis. Alternativ oder zusätzlich kann die Ermittlung des Höhenprofils während des Verstellens des Tresterbehältnisses von der Entleerstellung in die Aufnahmestellung erfolgen.

Bei einer vorteilhaften Weiterbildung des Verfahrens wird aus dem Höhenprofil, welches beim Verstellen des Tresterbehältnisses von der Aufnahmestellung in die Entleerstellung ermittelt wird, und aus dem Höhenprofil, welches beim Verstellen von der Entleerstellung in die Aufnahmestellung ermittelt wird, ein Differenz-Höhenprofil bestimmt. Aus dem Differenz-Höhenprofil wird bei dieser Weiterbildung die Menge an aus dem Tresterbehältnis entleertem Trester ermittelt.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert.

Es zeigen, jeweils schematisch:
- Fig. 1: eine erfindungsgemäße Kaffeemaschine mit dem Tresterbehältnis in einer Aufnahmestellung, in welcher das Tresterbehältnis den aus der Brühkammer ausfallenden Trester aufnehmen kann,
- Fig. 2: die Kaffeemaschine der Figur 1 mit dem Tresterbehältnis beim Verstellen von der Aufnahmestellung in eine Entleerstellung, in welcher der im Tresterbehältnis angesammelte Trester aus dem Tresterbehältnis entfernt werden kann.

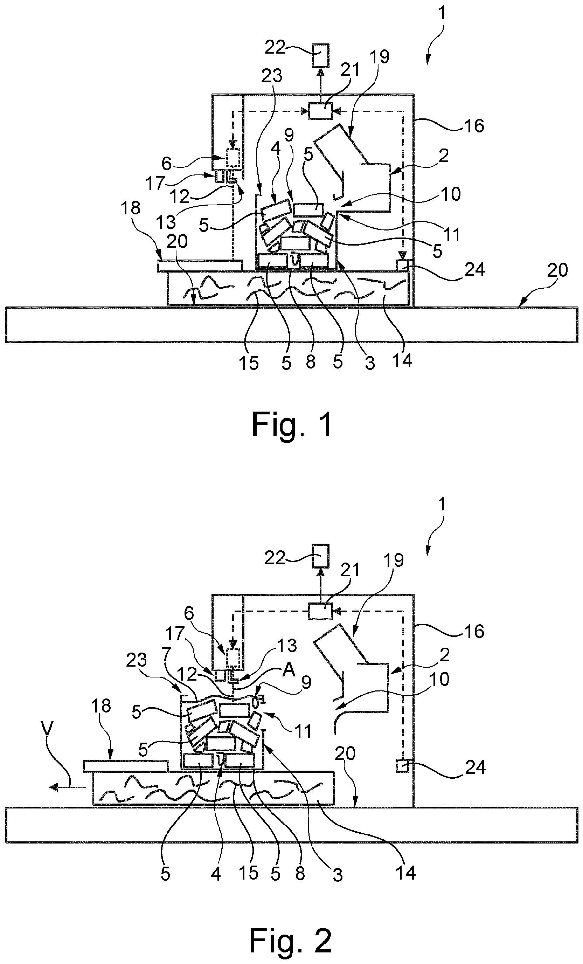

Die Figur 1 illustriert ein Beispiel einer als Kaffeevollautomat ausgebildeten erfindungsgemäßen Kaffeemaschine 1. Die Kaffeemaschine 1 umfasst eine Brühkammer 2 zum Zubereiten eines Kaffeeprodukts. Über einen Kaffeeschacht 19 kann Kaffee in die Brühkammer 2 eingebracht werden. Außerdem ist ein Tresterbehältnis 3 zum Aufnehmen des in der Brühkammer 2 erzeugten Tresters 4 vorgesehen. Die Brühkammer 2 umfasst einen Auswurf 10, über welchen der in der Brühkammer 2 erzeugte Trester 4 aus der Brühkammer 2 über eine im Tresterbehältnis 3 vorgesehene, Aufnahmeöffnung 11 in das Tresterbehältnis 3 gelangen kann. Des Weiteren umfasst die Kaffeemaschine 1 eine Abstellfläche 18, auf welcher ein Gefäß (nicht gezeigt) zum Befüllen mit dem in der Kaffeemaschine 1 erzeugten Kaffeeprodukt abgestellt werden kann. Oberhalb der Abstellfläche 18 ist ein Kaffeeauslass 17 angedeutet, über welche das Kaffeeprodukt bereitgestellt wird.

Im Beispiel der Figuren sind im Tresterbehältnis 3 mehrere sogenannte "Tresterkuchen" 5 benachbart zueinander angeordnet, die zusammen den Trester 4 ergeben. Unterhalb des Tresterbehältnisses 3 ist ein Wassersammelbehältnis 14 zum Sammeln des im Zuge des Brühvorgangs erzeugten Restwassers 15 angeordnet. Die Abstellfläche 18 deckt gemäß Figur 1 das Wassersammelbehältnis 14 oben teilweise ab. Die Kaffeemaschine 1 umfasst gemäß Figur 1 ein Gehäuse 16, an welchem das Tresterbehältnis 3 sowie das Wassersammelbehältnis 14 angeordnet sind.

Die Figur 1 zeigt das Tresterbehältnis 3 in einer am Gehäuse 16 angeordneten Aufnahmestellung zum Aufnehmen des in der Brühkammer 2 erzeugten Tresters 4. Das Tresterbehältnis 3 ist entlang einer Verstellrichtung V verstellbar zwischen der in Figur 1 gezeigten Aufnahmestellung und einer Entleerstellung zum Entleeren des im Tresterbehältnis 3 angesammelten Tresters 4.

In Figur 2 ist eine solche Verstellbewegung des Tresterbehältnisses 3 von der Aufnahmestellung in die Entleerstellung durch einen mit "V" bezeichneten Pfeil angedeutet. Wie die Figur 2 erkennen lässt, wird das Tresterbehältnis 3 zum Verstellen von der Aufnahmestellung in die Entleerstellung entlang der Verstellrichtung V von der Brühkammer 2 weg aus dem Gehäuse 16 herausgezogen, also von der Brühkammer 2 wegbewegt. Die Entleerstellung kann eine Position des Tresterbehältnisses 3 sein, in welcher das Tresterbehältnis 3 im Abstand zum Gehäuse 16 angeordnet ist (in den Figuren nicht gezeigt). Grundsätzlich können unter dem Begriff "Entleerstellung" jedwede Positionen des Tresterbehältnisses 3 gefasst sein, bei welchen das Tresterbehältnis 3 vollständig aus den verbleibenden Komponenten der Kaffeemaschine 1, insbesondere aus dem Gehäuse 16, entfernt worden ist.

Im Beispiel der Figuren bilden das Tresterbehältnis 3 und das Wassersammelbehältnis 14 eine Einheit aus, d.h. das Wassersammelbehältnis 14 ist fest mit dem Tresterbehältnis 3 verbunden und folglich zusammen mit dem Tresterbehältnis 3 zwischen der Aufnahmestellung und der Entleerstellung verstellbar.

Des Weiteren umfasst die Kaffeemaschine 1 eine Lasereinrichtung 6 zum Detektieren von im Tresterbehältnis 3 angesammeltem Trester 4. Die Lasereinrichtung 6 und das Tresterbehältnis 3 sind derart aufeinander abgestimmt, dass die Lasereinrichtung 6 während des Verstellens des Tresterbehältnisses 3 von der Aufnahmestellung in die Entleerstellung sowie, alternativ oder zusätzlich, von der Entleerstellung zurück in die Aufnahmestellung die Menge an in dem Tresterbehältnis 3 angesammeltem Trester 4 bestimmt. Wird beim Verstellen des Tresterbehältnisses 3 von der Entleerstellung in die Aufnahmestellung Trester 4 erkannt, so bedeutet dies, dass das Tresterbehältnis 3 nicht vollständig entleert wurde, dass sich also zumindest noch eine Restmenge an Trester 4 im Tresterbehältnis 3 befindet. Dies kann dann beim Zurücksetzen des eingangs beschriebenen Tresterzählers, welcher ein Maß für die Menge an beim Brühvorgang erzeugtem Trester 4 ist, berücksichtigt werden. Insbesondere kann für den Fall, dass eine Restmenge an Trester 4 ermittelt wurde, ein in diesem Fall fehlerhaftes Zurücksetzen des Tresterzählers auf einen Nullwert verhindert werden.

Mittels der Lasereinrichtung 6 kann ein Abstand A der Lasereinrichtung 6 zu dem im Tresterbehältnis 3 vorhandenen Trester 4 bestimmt werden, so dass mittels einer solchen Abstandsbestimmung während der Verstellbewegung des Tresterbehältnisses 3 ein Höhenprofil 7 des im Tresterbehältnis 3 angesammelten Tresters 4 bestimmt werden kann. Die Lasereinrichtung 6 ist also zum Bestimmen eines Höhenprofils 7 des beim Verstellen des Tresterbehältnisses 3 durch den Erfassungsbereich 12 der Lasereinrichtung bewegten Tresters 4 ausgebildet.

Wie die Figuren 1 und 2 erkennen lassen, ist die Lasereinrichtung 6 bevorzugt oberhalb des Tresterbehältnisses 3 angeordnet. Der Erfassungsbereich 12 der Lasereinrichtung 6 ist dann von oben auf einen oberen Rand 9 des im Tresterbehältnis 3 vorhandenen Tresters 4 gerichtet. Auf diese Weise wird erreicht, dass die Lasereinrichtung 6 das Tresterbehältnis 3 beim Verstellen von der Aufnahmestellung in die Entleerstellung entlang der Verstellrichtung V erfasst.

Die Lasereinrichtung 6 ist bevorzugt als Punktlaser ausgebildet, der ein eindimensionales Strahlprofil erzeugt. Ein solcher Punktlaser ist kostengünstig kommerziell verfügbar. Mittels eines Punktlasers kann ein zweidimensionales Höhenprofil 7 erstellt werden. Bei einer weiterbildenden Variante kann die Lasereinrichtung 6 aber auch als Laserscanner ausgebildet sein, der ein zweidimensionales Strahlprofil erzeugt. Mithilfe eines solchen, von einem Laserscanner erzeugten zweidimensionalen Strahlprofils kann ein dreidimensionales Höhenprofil 7 erstellt werden, in welchem also dreidimensionale Höheninformationen betreffend den im Tresterbehältnis 3 aufgenommen Trester 4 enthalten ist.

Die Lasereinrichtung 6 und das Tresterbehältnis 3 sind derart aufeinander abgestimmt, dass von der Lasereinrichtung 6 während des Verstellens des Tresterbehältnisses 3 von der Aufnahmestellung in die Entleerstellung oder umgekehrt die Menge an in einem Wassersammelbehältnis 14 angesammeltem Restwasser 15 bestimmt werden kann. Die Lasereinrichtung 6 kann außerdem dafür eingerichtet sein, zu bestimmen, ob sich das Tresterbehältnis 3 in der Aufnahmestellung oder in der Entleerstellung befindet. Beide Eigenschaften lassen sich durch entsprechende Ausrichtung des Erfassungsbereichs 12 auf das Tresterbehältnis 3 bzw. auf das Wassersammelbehältnis 14 realisieren.

Des Weiteren umfasst die Kaffeemaschine 1 eine Sensoreinrichtung 24, mittels welcher ein Bewegen des Tresterbehältnisses 3 aus der Aufnahmestellung weg detektierbar ist und welche bei einer solchen Detektion ein Sensorsignal erzeugt. Weiterhin ist eine mit der Sensoreinrichtung 24 zum Empfang des Sensorsignals in Kommunikationsverbindung stehende Steuerungseinrichtung 21 zum Steuern der Lasereinrichtung 6 vorgesehen. Die Steuerungseinrichtung 21 ist derart ausgebildet, dass sie bei Empfang des Sensorsignals die Lasereinrichtung 6 zur Bestimmung der Menge des im Tresterbehältnis 3 angesammelten Tresters 4 bzw. zur Bestimmung des Höhenprofils 7 aktiviert. Die Sensoreinrichtung 24 kann ein mechanischer, elektrischer oder elektromechanischer Schalter sein oder einen solchen Schalter umfassen.

Ferner umfasst die Steuerungseinrichtung 21 der Kaffeemaschine 1 eine mit der Lasereinrichtung 6 zusammenwirkende Auswertungseinheit 22. Die Auswertungseinheit 22 wertet die von der Lasereinrichtung 6 bereitgestellten Abstandsinformationen aus und berechnet auf diese Weise das gesuchte Höhenprofil 7 des Tresters 4 im Tresterbehältnis 3. In der Auswertungseinheit 22 kann ein Referenz-Parameter zum Vergleich mit dem von der Lasereinrichtung 6 erzeugten Höhenprofil 7 hinterlegt werden. Bevorzugt kann dieser Referenz-Parameter ein Abstand der Lasereinrichtung 6 zu einem Bodenniveau 20 der Kaffeemaschine 1 sein. Durch Vergleich des Referenz-Parameters mit dem mithilfe der Lasereinrichtung 6 bestimmten Höhenprofil 7 lässt sich die Füllstandshöhe des mit Trester 4 zumindest teilweise befüllten Tresterbehältnisses 3 bestimmen.

Um festzustellen, ob das Tresterbehältnis 3 in der Entleerstellung auch tatsächlich geleert wurde, so dass es nach dem erneuten Zurückverstellen in die Aufnahmestellung keinen Trester 4 mehr enthält, kann auch beim Verstellen des Tresterbehältnisses 3 von der Entleerstellung in die Aufnahmestellung - in analoger Weise zum Verstellen von der Aufnahmestellung in die Entleerstellung - der Füllstand des Tresterbehältnisses 3 bestimmt werden.

Durch eine kontinuierliche Bestimmung des Abstands zwischen der Lasereinrichtung 6 und dem Bodenniveau 20 der Kaffeemaschine 1 bei entnommenem bzw. in die Entleerstellung verstelltem Tresterbehältnis 3 kann erkannt werden, wenn das Tresterbehältnis 3 wieder von der Entleerstellung in die Aufnahmestellung bewegt wird; denn dann wird nicht mehr der Abstand zwischen der Lasereinrichtung 6 und dem Bodenniveau 20 der Kaffeemaschine gemessen, sondern ein geringer Abstand, nämlich der Abstand zwischen der Lasereinrichtung 6 und einem Boden 8 des Tresterbehältnisses 3, festgestellt.

Eine solche Abstandsänderung kann von der Auswertungseinheit 22 als Startsignal interpretiert werden, um eine Ermittlung des Höhenprofils 7 - ebenso wie beim Verstellen des Tresterbehältnisses 3 von der Aufnahmestellung in die Entleerstellung - zu starten. Mit anderen Worten, während das Tresterbehältnis 3 von der Entleerstellung in die Aufnahmestellung verstellt wird, wird mittels der Lasereinrichtung 6 ein Abstand zwischen der Lasereinrichtung 6 und dem oberen Rand 9 des Tresters 4 - soweit noch im Tresterbehältnis 3 vorhanden - bzw. dem Boden 8 des Tresterbehältnisses 3 - falls kein Trester 4 im Tresterbehältnis 3 die Laserstrahlung reflektiert - ermittelt. Insbesondere kann durch eine Bestimmung des Abstands zum oberen Rand 9 und durch anschließenden Vergleich dieses Abstands mit dem Abstand der Lasereinrichtung 6 zu einem oberen Rand 23 des Tresterbehältnisses 3 ermittelt werden, ob das Tresterbehältnis vollständig befüllt ist oder nicht. Falls kein Trester 4 im Tresterbehältnis 3 vorhanden ist - dies sollte nach dem Entleeren des Tresterbehältnisses 3 der Normalfall sein - so wird von der Lasereinrichtung 6 ein konstanter Abstand gemessen, der dem Abstand der Lasereinrichtung 6 zu dem Boden 8 des Tresterbehältnisses 3 entspricht.

Aus dem Höhenprofil 7, welches beim Verstellen des Tresterbehältnisses 3 von der Aufnahmestellung in die Entleerstellung ermittelt wird, und aus dem Höhenprofil, welches beim Verstellen von der Entleerstellung in die Aufnahmestellung ermittelt wird, kann optional ein Differenz-Höhenprofil bestimmt werden. Aus diesem Differenz-Höhenprofil kann wiederum die Menge des aus dem Tresterbehältnis 3 entleerten Tresters 4 ermittelt werden. Zwischen der Lasereinrichtung 6 und dem Tresterbehältnis 3 kann eine für die Laserstrahlung transparente Blende 13 angeordnet. Auf diese Weise kann ein unerwünschtes Beschlagen der Lasereinrichtung 6 mit Wasserdampf vermieden werden. Vorzugsweise ist die Blende 13 wie in den Figuren angedeutet direkt am Laserauslass der Lasereinrichtung 6 angeordnet. Besonders bevorzugt ist die Blende 13 mittels einer elektrischen Heizeinrichtung (nicht gezeigt) beheizbar. Durch ein Beheizen der Blende 13 kann ein teilweises oder sogar vollständiges Beschlagen der Blende 13, welches die Transmission der Laserstrahlung mindern würde, verhindert werden.

### Bezugszeichenliste

- 1: Kaffeemaschine
- 2: Brühkammer
- 3: Tresterbehältnis
- 4: Trester
- 5: Tresterkuchen
- 6: Lasereinrichtung
- 7: Höhenprofil
- 8: Boden (Tresterbehältnis)
- 9: oberer Rand (Trester)
- 10: Auswurf
- 11: Aufnahmeöffnung
- 12: Erfassungsbereich
- 13: Blende
- 14: Wassersammelbehältnis
- 15: Restwasser
- 16: Gehäuse
- 17: Kaffeeauslass
- 18: Abstellfläche
- 19: Kaffeeschacht
- 20: Bodenniveau (Kaffeemaschine)
- 21: Steuerungseinrichtung
- 22: Auswertungseinrichtung
- 23: oberer Rand (Tresterbehältnis)
- 24: Sensoreinrichtung
- V: Verstellrichtung
- A: Abstand

## Patentansprüche

1. Kaffeemaschine (1), insbesondere Kaffeevollautomat, mit einer Brühkammer (2) zum Zubereiten eines Kaffeeprodukts, mit einem Tresterbehältnis (3), welches zum Aufnehmen des in der Brühkammer (2) erzeugten Tresters (4) in einer Aufnahmestellung angeordnet ist und zum Entleeren des Tresterbehältnisses (3) von der Aufnahmestellung in eine Entleerstellung
verstellbar ist; **dadurch gekennzeichnet, dass** die Kaffeemachine eine Lasereinrichtung (6) zum Detektieren von im Tresterbehältnis (3) angesammelten Trester (4) umfasst, wobei die Lasereinrichtung (6) und das Tresterbehältnis (3) derart aufeinander abgestimmt sind, dass die Lasereinrichtung (6) während des Verstellens des Tresterbehältnisses (3) von der Aufnahmestellung in die Entleerstellung oder umgekehrt die Menge an in dem Tresterbehältnis (3) angesammeltem Trester (4) bestimmt.

2. Kaffeemaschine nach Anspruch 1, **dadurch gekennzeichnet, dass** die Lasereinrichtung (6) dafür eingerichtet ist, zu bestimmen, ob sich das Tresterbehältnis (3) in der Aufnahmestellung oder in der Entleerstellung befindet.

3. Kaffeemaschine nach Anspruch 1 oder 2, **dadurch gekennzeichnet, dass** die Lasereinrichtung (6) zur Bestimmung eines Abstands (A) der Lasereinrichtung (6) zu dem im Tresterbehältnis (3) vorhandenen Trester (4) ausgebildet ist, so dass mittels einer solchen Abstandsbestimmung das Höhenprofil (7) des im Tresterbehältnis (3) angesammeltem Tresters (4) bestimmbar ist.

4. Kaffeemaschine nach einem der Ansprüche 1 bis 3, **dadurch gekennzeichnet, dass** die Lasereinrichtung (6) zum Bestimmen eines Höhenprofils (7) des beim Verstellen des Tresterbehältnisses (3) durch einen Erfassungsbereich (12) der Lasereinrichtung (6) bewegten Tresters (4) ausgebildet ist.

5. Kaffeemaschine nach einem der vorhergehenden Ansprüche, **dadurch gekennzeichnet, dass** die Lasereinrichtung (6) oberhalb des Tresterbehältnisses (3) angeordnet ist, so dass der Erfassungsbereich (12) der Lasereinrichtung (6), vorzugsweise von oben, auf einen oberen Rand (9) des im Tresterbehältnis (3) vorhandenen Tresters (4) gerichtet ist.

6. Kaffeemaschine nach Anspruch 4 oder 5, **dadurch gekennzeichnet, dass** der Erfassungsbereich (12) der Lasereinrichtung (6) derart ausgerichtet ist, dass er das Tresterbehältnis (3) beim Verstellen von der Aufnahmestellung in die Entleerstellung und/oder beim Verstellen von der Entleerstellung in die Aufnahmestellung erfasst.

7. Kaffeemaschine nach einem der vorhergehenden Ansprüche, **dadurch gekennzeichnet, dass** zwischen der Lasereinrichtung (6) und dem Tresterbehältnis (3) eine für die von der Lasereinrichtung (6) erzeugte Laserstrahlung transparente Blende (13) angeordnet ist.

8. Kaffeemaschine nach einem der vorhergehenden Ansprüche **dadurch gekennzeichnet, dass** die Kaffeemaschine (1) ferner umfasst: eine Sensoreinrichtung (24), mittels welcher ein Bewegen des Tresterbehältnisses (3) aus der Aufnahmestellung weg detektierbar ist und welche bei einer solchen Detektion ein Sensorsignal erzeugt; und eine mit der Sensoreinrichtung (24) zum Empfang des Sensorsignals in Kommunikationsverbindung stehende Steuerungseinrichtung (21) zum Steuern der Lasereinrichtung (6), derart ausgebildet, dass sie bei Empfang des Sensorsignals die Lasereinrichtung (6) zur Bestimmung der Menge des im Tresterbehältnis (3) vorhandenem Tresters (4) aktiviert.

9. Kaffeemaschine nach Anspruch 8, **dadurch gekennzeichnet, dass** die Kaffeemaschine (1), insbesondere die Steuerungseinrichtung (21), eine mit der Lasereinrichtung (6) zusammenwirkende Auswertungseinheit (22) umfasst, in welcher wenigstens ein Referenz-Parameter, insbesondere zum Vergleich mit dem von der Lasereinrichtung (6) erzeugten Höhenprofil (7) hinterlegt ist, wobei der Referenz-Parameter vorzugsweise ein Abstand (A) der Lasereinrichtung (6) zu einem Bodenniveau (20) der Kaffeemaschine (1) ist.

10. Kaffeemaschine nach einem der vorhergehenden Ansprüche, **dadurch gekennzeichnet, dass** die Lasereinrichtung (6) als Punktlaser ausgebildet ist, der ein eindimensionales Strahlprofil erzeugt, oder als Laserscanner ausgebildet ist, der ein zweidimensionales Strahlprofil erzeugt.

11. Kaffeemaschine nach einem der vorhergehenden Ansprüche, **dadurch gekennzeichnet, dass** die Lasereinrichtung (6) als Punktlaser ausgebildet ist, der ein eindimensionales Strahlprofil erzeugt, oder als Laserscanner ausgebildet ist, der ein zweidimensionales Strahlprofil erzeugt.

12. Kaffeemaschine nach einem der vorhergehenden Ansprüche, **dadurch gekennzeichnet, dass** die Lasereinrichtung (6) und das Tresterbehältnis (3) derart aufeinander abgestimmt sind, dass die Lasereinrichtung (6) während des Verstellens des Tresterbehältnisses (3) von der Aufnahmestellung in die Entleerstellung oder umgekehrt die Menge an in einem Wassersammelbehältnis (3) angesammeltem Restwasser (15) bestimmt.

13. Verfahren zur Bestimmung der Menge des in einem Tresterbehältnis (3) einer Kaffeemaschine (1) angesammelten Tresters (4), gemäß welchem das Tresterbehältnis (3) mit dem Trester (4) durch den Erfassungsbereich (12) einer Lasereinrichtung (6) bewegt wird, wobei von der Lasereinrichtung (6) während des Bewegens des Tresterbehältnisses (3) der Abstand (A) zum Trester (4) bestimmt wird, und gemäß welchem aus dieser Abstandsbestimmung ein Höhenprofil (7) des im Tresterbehältnis (3) vorhandenen Tresters (4) ermittelt wird.

14. Verfahren nach Anspruch 13, **dadurch gekennzeichnet, dass** die Ermittlung des Höhenprofils (7) während des Verstellens des Tresterbehältnisses (3) von einer Aufnahmestellung zum Aufnehmen von Trester (4) aus einer Brühkammer (2) der Kaffeemaschine (1) in eine Entleerstellung zum Entleeren des Tresters (4) aus dem Tresterbehältnis (3) erfolgt; und/oder dass die Ermittlung des Höhenprofils (7) während des Verstellens des Tresterbehältnisses (3) von der Entleerstellung in die Aufnahmestellung erfolgt.

15. Verfahren nach Anspruch 13 oder 14, **dadurch gekennzeichnet, dass** aus dem Höhenprofil (7), welches beim Verstellen des Tresterbehältnisses (3) von der Aufnahmestellung in die Entleerstellung ermittelt wird, und aus dem Höhenprofil, welches beim Verstellen von der Entleerstellung in die Aufnahmestellung ermittelt wird, ein Differenz-Höhenprofil ermittelt wird, aus welchem die Menge des aus dem Tresterbehältnis (3) entleerten Tresters (4) ermittelt wird oder ermittelt werden kann.

## Claims

1. Coffee machine (1), in particular fully automatic coffee machine, having a brewing chamber (2) for preparing a coffee product, having a coffee grounds container (3) which is arranged in a receiving position in order to receive the coffee grounds (4) produced in the brewing chamber (2) and can be shifted from the receiving position into an emptying position in order to empty the coffee grounds container (3), **characterised in that** the coffee machine comprises a laser facility (6) for detecting coffee grounds (4) collected in the coffee grounds container (3), wherein the laser facility (6) and the coffee grounds container (3) are aligned with one another so that the laser facility (6) determines the quantity of coffee grounds (4) collected in the coffee grounds container (3) when the coffee grounds container (3) is shifted from the receiving position into the emptying position or vice versa.

2. Coffee machine according to claim 1, **characterised in that** the laser facility (6) is designed to determine whether the coffee grounds container (3) is in the receiving position or in the emptying position.

3. Coffee machine according to claim 1 or 2, **characterised in that** the laser facility (6) is embodied to determine a distance (A) between the laser facility (6) and the coffee grounds (4) present in the coffee grounds container (3) so that the height profile (7) of the coffee grounds (4) collected in the coffee grounds container (3) can be determined by means of such a distance determination.

4. Coffee machine according to one of claims 1 to 3, **characterised in that** the laser facility (6) is embodied to determine a height profile (7) of the coffee grounds (4) moved when the coffee grounds container (3) is shifted through a detection range (12) of the laser facility (6).

5. Coffee machine according to one of the preceding claims, **characterised in that** the laser facility (6) is arranged above the coffee grounds container (3) so that the detection range (12) of the laser facility (6), preferably from above, is directed at an upper edge (9) of the coffee grounds (4) present in the coffee grounds container (3).

6. Coffee machine according to claim 4 or 5, **characterised in that** the detection range (12) of the laser facility (6) is designed so that it detects the coffee grounds container (3) when it is shifted from the receiving position into the emptying position and/or when it is shifted from the emptying position into the receiving position.

7. Coffee machine according to one of the preceding claims, **characterised in that** a screen (13) which is transparent to the laser radiation produced by the laser facility (6) is arranged between the laser facility (6) and the coffee grounds container (3).

8. Coffee machine according to one of the preceding claims, **characterised in that** the coffee machine (1) further comprises: a sensor facility (24), by means of which a movement of the coffee grounds container (3) out of the receiving position can be detected and which, with such a detection, produces a sensor signal; and a control facility (21) for controlling the laser facility (6) which is connected communicatively with the sensor facility (24) for receiving the sensor signal, embodied such that it activates the laser facility (6) for determining the quantity of coffee grounds (4) present in the coffee grounds container (3) when the sensor signal is received.

9. Coffee machine according to claim 8, **characterised in that** the coffee machine (1), in particular the control facility (21), comprises an evaluation unit (22) which interacts with the laser facility (6), in which evaluation unit at least one reference parameter is stored, in particular for comparison with the height profile (7) produced by the laser facility (6), wherein the reference parameter is preferably a distance (A) between the laser facility (6) and a base level (20) of the coffee machine (1).

10. Coffee machine according to one of the preceding claims, **characterised in that** the laser facility (6) is embodied as a point laser, which produces a one-dimensional beam profile, or is embodied as a laser scanner, which produces a two-dimensional beam profile.

11. Coffee machine according to one of the preceding claims, **characterised in that** the laser facility (6) is embodied as a point laser, which produces a one-dimensional beam profile, or is embodied as a laser scanner, which produces a two-dimensional beam profile.

12. Coffee machine according to one of the preceding claims, **characterised in that** the laser facility (6) and the coffee grounds container (3) are aligned with one another so that the laser facility (6) determines the quantity of residual water (15) collected in a water collecting container (3) when the coffee grounds container (3) is shifted from the receiving position into the emptying position.

13. Method for determining the quantity of coffee grounds (4) collected in a coffee grounds container (3) of a coffee machine (1), according to which the coffee grounds container (3) with the coffee grounds (4) is moved through the detection range (12) of a laser facility (6), wherein the laser facility (6) is used to determine the distance (A) from the coffee grounds (A) when the coffee grounds container (3) is moved, and according to which a height profile (7) of the coffee grounds (4) present in the coffee grounds container (3) is determined from this distance determination.

14. Method according to claim 13, **characterised in that** the height profile (7) is determined when the coffee grounds container (3) is shifted from a receiving position for receiving coffee grounds (4) from a brewing chamber (2) of the coffee machine (1) into an emptying position for emptying the coffee grounds (4) out of the coffee grounds container (3); and/or that the height profile (7) is determined when the coffee grounds container (3) is shifted from the emptying position into the receiving position.

15. Method according to claim 13 or 14, **characterised in that** the height profile (7) which is determined when the coffee grounds container (3) is displaced from the receiving position into the emptying position and the height profile which is determined when the coffee grounds container is shifted from the emptying position into the receiving position is used to determine a difference height profile, from which the quantity of coffee grounds (4) emptied from the coffee grounds container (3) is or can be determined.

## Revendications

1. Machine à café (1), en particulier machine à café entièrement automatique, avec une chambre de percolation (2) destinée à la préparation d'un café, avec un récipient pour le marc (3), lequel est agencé dans une position de logement pour la prise du marc (4) produit dans la chambre de percolation (2) et peut être ajusté pour la vidange du récipient pour le marc (3) de la position de logement dans une position de vidange; **caractérisée en ce que** la machine à café comprend un dispositif laser (6) pour la détection de marc (4) accumulé dans le récipient pour le marc (3), le dispositif laser (6) et le récipient pour le marc (3) s'accordant si bien l'un sur l'autre que le dispositif laser (6) détermine, pendant l'ajustement du récipient pour le marc (3) de la position de logement dans la position de vidange, ou inversement, la quantité de marc (4) accumulé dans le récipient pour le marc (3).

2. Machine à café selon la revendication 1, **caractérisée en ce que** le dispositif laser (6) est prévu pour déterminer si le récipient pour le marc (3) se trouve dans la position de logement ou dans la position de vidange.

3. Machine à café selon la revendication 1 ou 2, **caractérisée en ce que** le dispositif laser (6) est réalisé pour déterminer une distance (A) du dispositif laser (6) par rapport au marc (4) présent dans le récipient pour marc (3) de sorte qu'il est possible de déterminer au moyen d'une telle détermination de distance, le profil de la hauteur (7) du marc (4) accumulé dans le récipient pour le marc (3).

4. Machine à café selon l'une des revendications 1 à 3, **caractérisée en ce que** le dispositif laser (6) est réalisé pour déterminer un profil de la hauteur (7) du marc (4) déplacé lors de l'ajustement du récipient pour le marc (3) à travers une zone de détection (12) du dispositif laser (6).

5. Machine à café selon l'une des revendications précédentes, **caractérisée en ce que** le dispositif laser (6) est disposé au-dessus du récipient pour le marc (3), de sorte que la zone de détection (12) du dispositif laser (6) est dirigée de préférence du haut, sur un bord (9) supérieur du marc (4) présent dans le récipient pour le marc (3).

6. Machine à café selon la revendication 4 ou 5, **caractérisée en ce que** la zone de détection (12) du dispositif laser (6) est orientée de sorte qu'elle détecte le récipient pour le marc (3) lors de l'ajustement de la position de logement dans la position de vidange et/ou lors de l'ajustement de la position de vidange dans la position de logement.

7. Machine à café selon l'une des revendications précédentes, **caractérisée en ce qu'**entre le dispositif laser (6) et le récipient pour le marc (3) est agencé un écran (13) transparent pour le rayonnement laser produit par le dispositif laser (6).

8. Machine à café selon l'une des revendications précédentes, **caractérisée en ce que** la machine à café (1) comprend en outre: un dispositif détecteur (24) au moyen duquel un mouvement du récipient pour le marc (3) sortant de la position de logement est détectable et lequel, dans le cas d'une telle détection, produit un signal détecteur; et un dispositif de commande (21) restant en liaison de communication avec le dispositif détecteur (24) pour la réception du signal détecteur, destiné à commander le dispositif laser (6), réalisé de sorte que lors de la réception du signal détecteur, il active le dispositif laser (6) pour déterminer la quantité du marc (4) présent dans le récipient pour le marc (3).

9. Machine à café selon la revendication 8, **caractérisée en ce que** la machine à café (1), en particulier le dispositif de commande (21) comprend une unité d'analyse (22) coopérant avec le dispositif laser (6), dans laquelle au moins un paramètre de référence, en particulier destiné à la comparaison avec le profil de la hauteur (7) produit par le dispositif laser (6) est enregistré, le paramètre de référence étant de préférence une distance (A) du dispositif laser (6) par rapport au niveau du fond (20) de la machine à café (1).

10. Machine à café selon l'une des revendications précédentes, **caractérisée en ce que** le dispositif laser (6) est réalisé comme un laser à points, lequel produit un profil de rayonnement unidimensionnel, ou comme un scanner laser, lequel produit un profil de rayonnement bidimensionnel.

11. Machine à café selon l'une des revendications précédentes, **caractérisée en ce que** le dispositif laser (6) est réalisé comme un laser à points, lequel produit un profil de rayonnement unidimensionnel, ou comme un scanner laser, lequel produit un profil de rayonnement bidimensionnel.

12. Machine à café selon l'une des revendications précédentes, **caractérisée en ce que** le dispositif laser (6) et le récipient pour le marc (3) s'accordent si bien l'un sur l'autre que le dispositif laser (6) détermine, pendant l'ajustement du récipient pour le marc (3) de la position de logement dans la position de vidange, ou inversement, la quantité d'eau résiduelle (15) accumulée dans un récipient de collecte d'eau (3).

13. Procédé de détermination de la quantité de marc (4) accumulée dans le récipient pour le marc (3) d'une machine à café (1), selon lequel le récipient pour le marc (3) est déplacé avec le marc (4) à travers la zone de détection (12) d'un dispositif laser (6), la distance (A) par rapport au marc (4) étant déterminée par le dispositif laser (6) pendant le mouvement du récipient pour le marc (3), et selon lequel, sur base de cette détermination de distance, un profil de la hauteur (7) du marc (4) présent dans le récipient pour le marc (3) est détecté.

14. Procédé selon la revendication 13, **caractérisé en ce que** la détection du profil de la hauteur (7) s'effectue pendant l'ajustement du récipient pour le marc (3) sur base d'une position de logement pour le logement du marc (4) d'une chambre de percolation (2) de la machine à café (1), dans une position de vidange pour la vidange du marc (4) hors du récipient pour le marc (3); et/ou **en ce que** la détection du profil de la hauteur (7) s'effectue pendant l'ajustement du récipient pour le marc (3) de la position de vidange dans la position de logement.

15. Procédé selon la revendication 13 ou 14, **caractérisé en ce que**, sur base du profil de la hauteur (7), lequel est déterminé lors de l'ajustement du récipient pour le marc (3) de la position de logement dans la position de vidange, et sur base du profil de la hauteur, lequel est détecté lors de l'ajustement de la position de vidange dans la position de logement, un profil différentiel de la hauteur est déterminé, sur base duquel la quantité du marc (4) vidangé du récipient pour le marc (3) est détectée ou peut être détectée.
